# EUROPEAN PATENT SPECIFICATION

(11) **EP 0 806 271 B1**
(45) Date of publication and mention of the grant of the patent: **16.02.2000**
(21) Application number: 97201135.7
(22) Date of filing: 17.04.1997
(51) Int. Cl.: B27L 7/00

(54) **Hydraulic service system for wood splitting machines**
Hydraulisches Versorgungssystem für Holzspalter
Mécanisme de commande hydraulique pour fendeuses à bois

(30) Priority: 08.05.1996 IT RE960029
(43) Date of publication of application: 12.11.1997
(73) Proprietor: Bell S.R.L., 42100 Reggio Emilia (IT)
(72) Inventor: Magnani, Elio, 42100 Reggio Emilia (IT)
(74) Representative: Corradini, Corrado

(56) References cited:
- US-A- 3 077 214
- US-A- 5 323 822
- US-A- 5 375 638
- US-A- 5 460 211

## Description

This invention relates to wood-splitting machines.

Wood-splitting machines are known comprising a usually horizontal cradle intended to receive the wood pieces to be split, and provided with an anvil and an opposing wedge or blade between which the wood pieces are arranged (see for example US-3,077,214-A which discloses the preamble of claim 1).

In certain models the wedge is fixed to the cradle structure, whereas the anvil is arranged to slide backwards and forwards under the control of a single or double acting hydraulic cylinder-piston unit.

Said cylinder-piston unit is operated by a hydraulic power unit, with the delivery side of which there is associated at least one two-way slide valve in series with a usual overpressure or recirculation valve which is separate from the preceding, and can be regulated as required, to recirculate the oil on exceeding a predetermined pressure.

For safety reasons, known wood-splitting machines comprise either complicated and costly devices for operating a single valve, or at least two distribution valves positioned in series and keeping both the operator's hands occupied.

As stated, the two said valves consist of two separate members, and are therefore positioned at different points of the hydraulic circuit, this involving substantial machining for forming the respective seats and connections, and the use of a relatively large number of components.

This results in a certain constructional complexity which is also inconvenient from the cost viewpoint.

Known machines have the further drawback that when the anvil reaches its forward end-of-travel position, where a large force is no longer necessary seeing that the wood piece has already been split, it halts against a stop while the power unit continues to operate under a force or load which can be high, and is determined by the prechosen opening pressure for the overpressure valve, with consequent undesirable oil overheating.

The main object of the present invention is to provide means able to obviate the aforesaid problems within the context of a simple, rational and reliable construction.

This is attained according to the invention by means of the features of claim 1.

Moreover, according to an advantageous characteristic of the invention, means are preferably associated with the cylinder-piston unit to suddenly lower the oil pressure within the operating chamber of the cylinder-piston unit when the respective piston is close to its end of forward travel.

The characteristics and the constructional merits of the invention, together with its operation, will be apparent from the detailed description given hereinafter with reference to the accompanying figures, which illustrate a preferred embodiment thereof by way of non-limiting example.

Figure 1 is a perspective view of a wood-splitting machine provided with a hydraulic system according to the invention.

Figure 2 is an axial vertical section through the invention.

Figure 3 is a section on the line III-III of Figure 2 to an enlarged scale.

Figure 4 shows a part of Figure 3 to an enlarged scale.

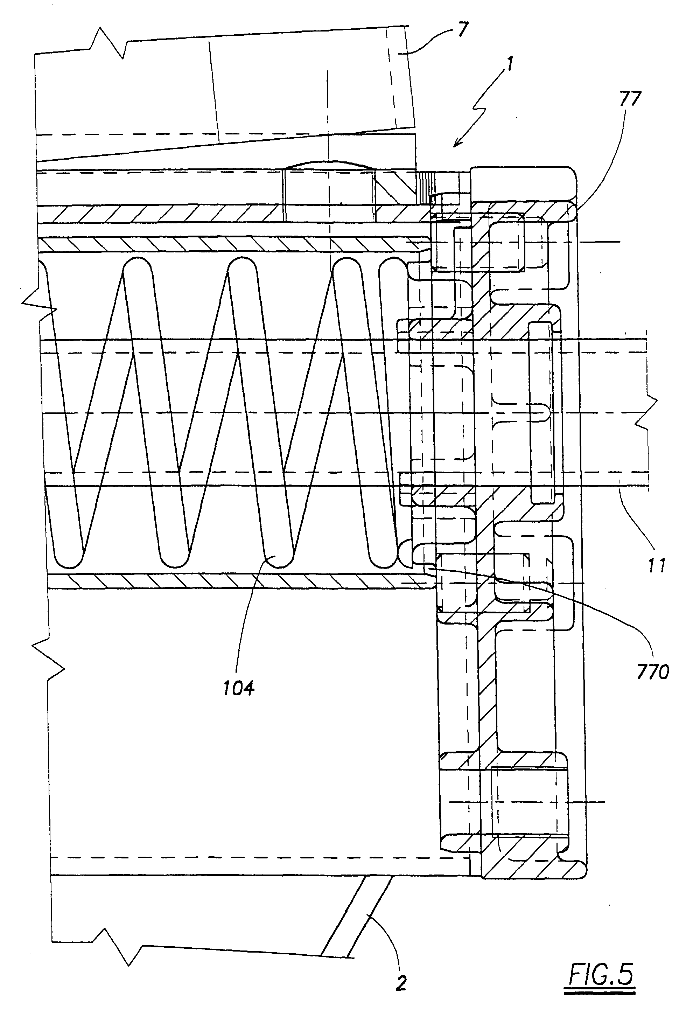

Figure 5 shows the right end part of Figure 2 to an enlarged scale.

Figure 6 shows the circled detail VI of Figure 2 at the moment in which the piston of the cylinder-piston unit bypasses the oil towards the tank.

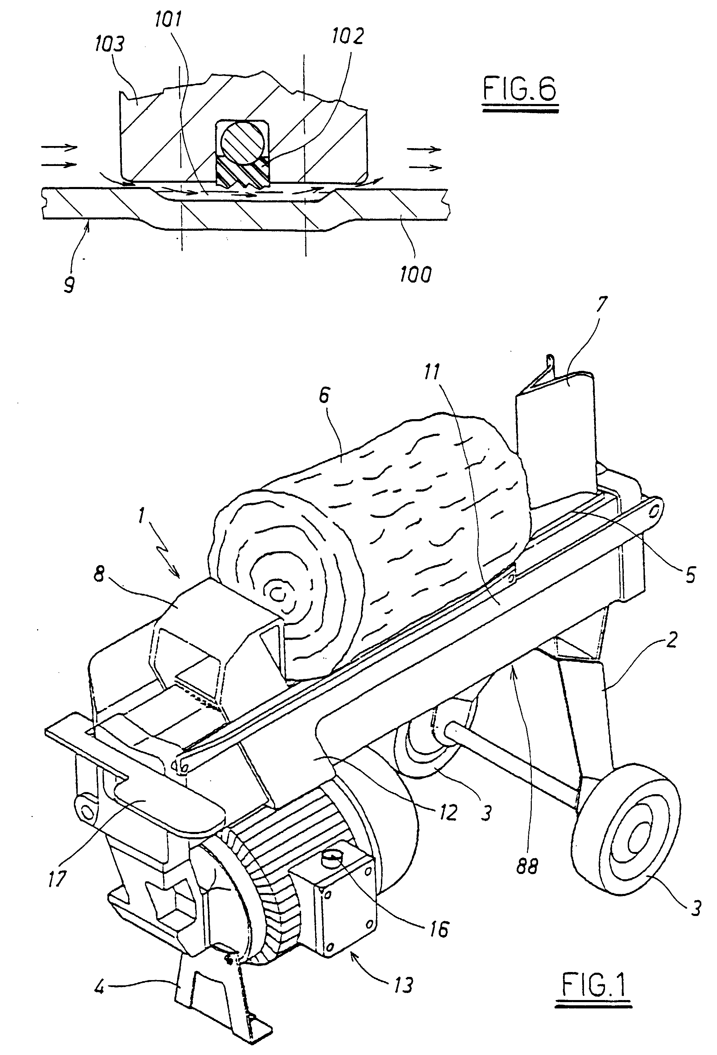

Said figures, and in particular Figure 1, show a wood-splitting machine 1, of usual general structure, comprising briefly a frame 2 lowerly provided with two wheels 3 and a support foot 4, and upperly comprising a cradle 5 for supporting the wood pieces to be split.

To one end of the cradle 5 there is fixed a wedge 7, in front of which there is a movable anvil 8 controlled by an underlying single-acting hydraulic cylinder-piston unit 9, this latter being accommodated within the oil tank 88.

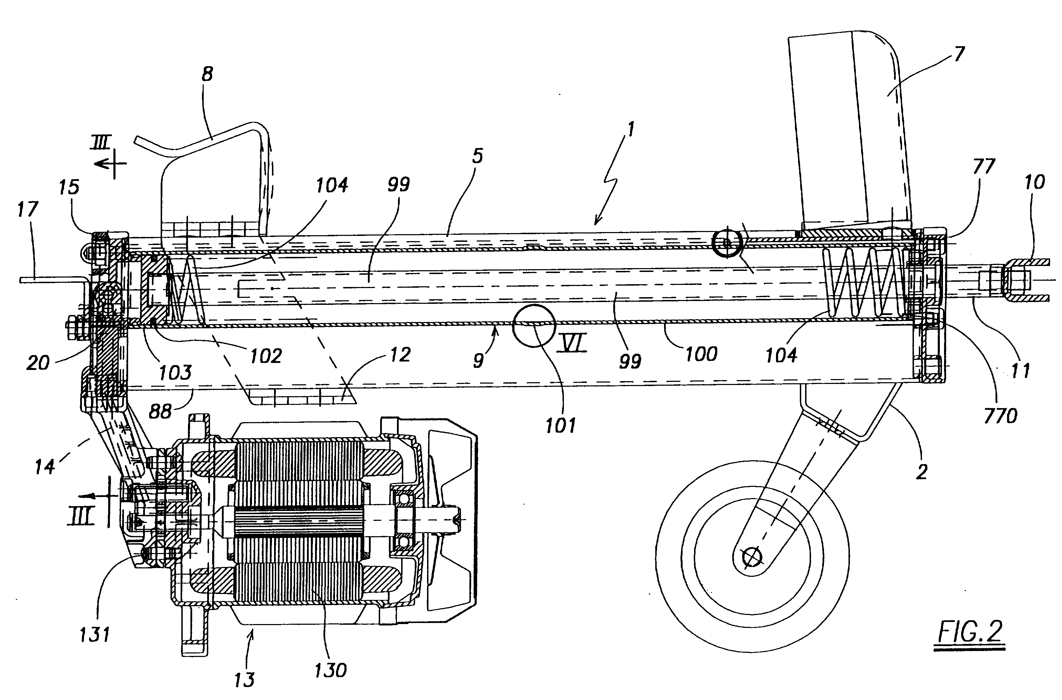

The rod 99 of the cylinder-piston unit 9 extends beyond said wedge 7 where it carries fixed to it a crosspiece 10 from which there branch two opposing longitudinal connecting rods 11 connected to a collar 12 rigid with said anvil 8 (see Figures 1, 2).

With the cylinder-piston unit 9 there is associated a power unit 13 consisting of an electric motor 130 and a hydraulic pump 131.

The motor 130 is activated by an automatic switch-off switch 16 (see Figure 1), in particular consisting of a pushbutton with a return spring.

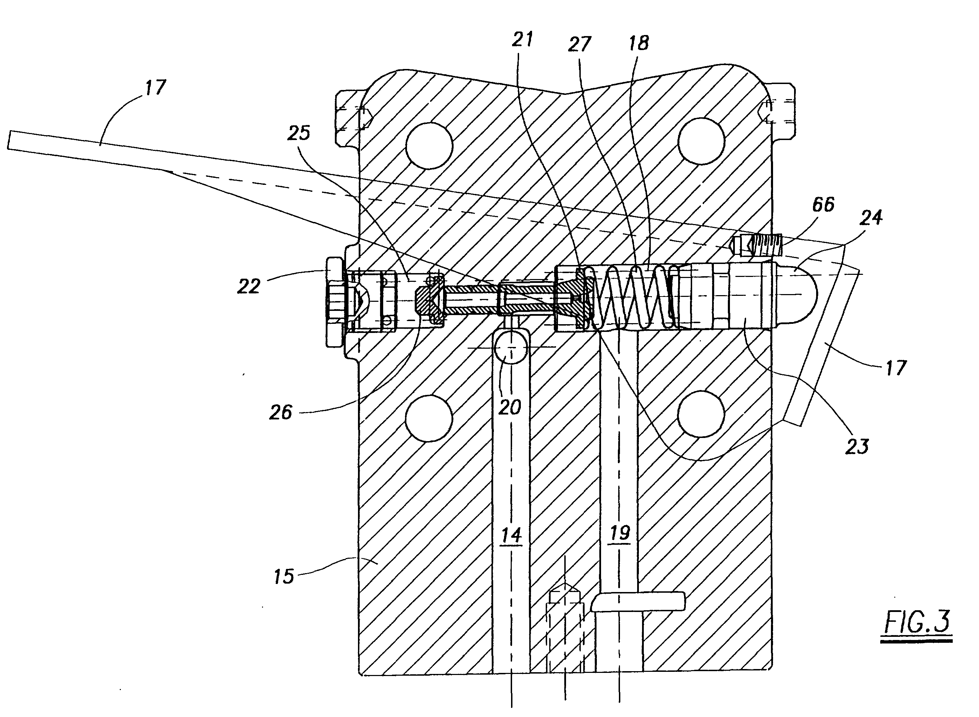

As can be seen in Figures 2 and 3, the delivery conduit 14 of the pump 131 communicates with a through transverse hole 18 provided in the head 15 of the cylinder-piston unit 9 and from which there branches an intake and discharge conduit 19.

Said hole 18 is positioned downstream of an orifice 20 which connects the conduit 14 to the hydraulic thrust chamber of the cylinder 100 of the cylinder-piston unit 9.

Said hole 18 has three sections of different diameter, the central section, of smallest diameter, being that which communicates with the conduit 14 and constituting the housing for a valving element 21.

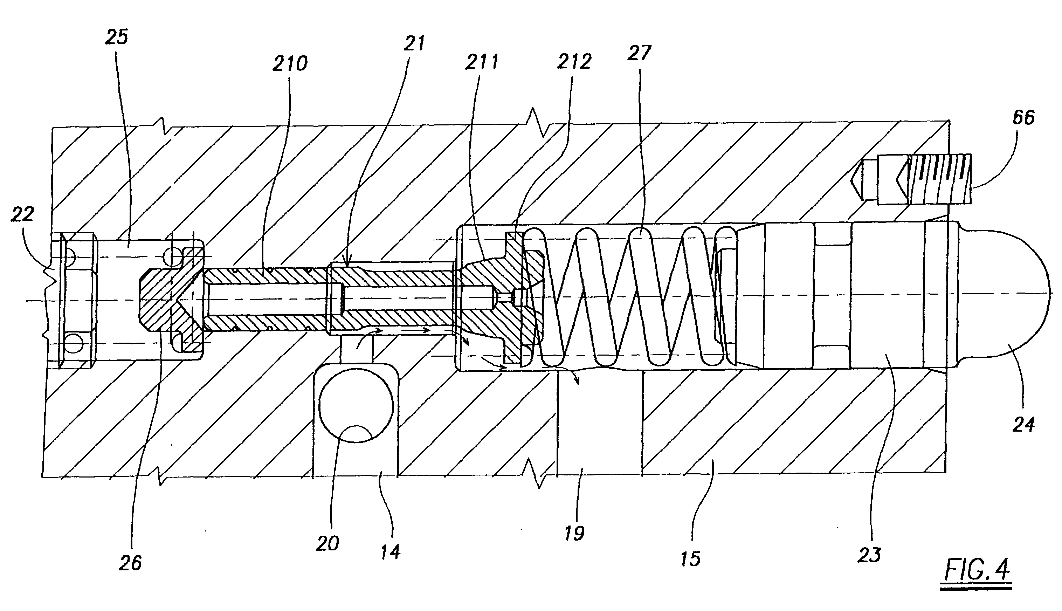

The opposing ends of said hole 18 are occupied respectively by a sealing plug 22 (to the left in Figures 3 and 4), and by a piston 23 (to the right in said figures) which is sealedly slidable within its own portion of the hole 18.

Said piston 23 extends beyond the head 15 by means of an endpiece 24 of spherical cap shape, against which there rests the lever 17 by which the oil feed is controlled.

The free end of the lever 17 is located on that side of the wood-splitting machine 1 (see Figure 1) on which the switch 16 is situated, the maximum travel of the lever 17 being limited by a threaded screw 66 screwed into the head 15 (Figures 3 and 4).

Between the plug 22 and the piston 23 there are provided in the stated order, starting from the former and proceeding towards the latter, a counteracting spring 25, a stop disc 26 for said valving element 21, and a thrust spring 27 which in the position shown in Figure 4 is completely unloaded.

The valving element 21 is of mushroom shape comprising, in the stated order proceeding from left to right with reference to Figure 4, a hollow cylindrical stem 210 of different cross-sections which is accommodated, as an exact fit allowing free sliding, within the central smallest-diameter part of the hole 18; a valving portion 211 of frusto-conical shape the major base of which faces the piston 23 and has a diameter greater than that of said central part of the hole 18; and a flange 212.

The spring 27 rests against said flange, said return conduit 19 opening into that part of the hole 18 which accommodates the latter spring.

It should be noted that of the two widened shoulders provided respectively to the left and right of said central smallest-diameter part of the hole 18, the first acts as a forward travel stop for the disc 26 and the second as the valve seat for the frusto-conical portion 211 of the valving element 21.

It should also be noted that the thrust obtainable from the spring 25 is much less than that obtainable from the spring 27 when this is compressed, said spring 27 being, as stated, completely unloaded when the valving element 21 is in the position shown in Figures 3 and 4.

Essentially, with the valving element 21 in said position, and assuming that the motor-pump unit 13 is currently de-energized, the spring 25 merely ensures contact between the disc 26 and the stem 210 of the valving element 21, so maintaining this latter open by resting against the currently unloaded spring 27.

With particular reference to Figure 4, it can be seen that the stem 210 of the valving element 21 has a first cylindrical portion situated towards said disc 26 and slidingly inserted as an exact fit into the central part of said hole 18, and a second cylindrical portion situated towards said spring 27 and accommodated within said central part of the hole 18 such as to leave a surrounding annular space.

When the valving element 21 is in the position illustrated, said narrow cross-section portion of the stem 210 lies substantially in correspondence with the end of the delivery conduit 14, with the frusto-conical portion 211 of the valving element spaced from its seal seat.

According to a further characteristic of the invention, the cylinder 100 of the cylinder-piston unit 9 is provided internally with two small diametrically opposite bulges or enlargements (see Figures 2 and 6), the bases of which have a diameter greater than the outer diameter of the seal ring 102 of the piston 103, and a length greater than the axial dimension of the ring 102.

In practice, said bulges 101 define the forward stop position of the piston 103, as will be apparent hereinafter.

Further constructional characteristics of the invention will be evident from the description of its operation.

Having started the power unit 13, the operator maintains the switch 16 pressed with one hand while with the other hand he operates the lever 17.

Until the lever 17 is lowered, the pumped oil follows the path defined by the delivery conduit 14, the passage gaps between the valving element 21 and the hole 18, and the return conduit 19.

When the lever 17 is lowered until it rests against the screw 66, it compresses the spring 27 which urges the valving element 21 into its closed position.

After the frusto-conical portion 211 of this latter is sealedly resting against its seat, the spring 27 further shortens by an amount determined by the rotation of the lever 17, hence providing the closure force for the valving element 21, which compels the arriving oil to enter the hydraulic chamber of the cylinder-piston unit 9, with the result that the piston 103 slides against the thrust provided by the return spring 104.

Essentially, the shortening of said spring 27 provides a closure force for the valving element 21 (which at that moment acts as a feed valve), ie the force which determines the maximum pressure which the oil can attain, to cause the piston 103 to slide, said force being chosen at will by adjusting the screw 66.

If the total force given by the sum of the return force of the spring 104 and the resistance offered by the wood piece 6 is such that the chosen maximum operating pressure is not reached, the valving element 21 remains closed and the piston 103 continues to slide until it reaches the bulges or enlargements 101.

At this point the oil pressure suddenly falls because the oil seeps beyond the piston 103 through the gaps made available by the bulges or enlargements 101, from where it returns to the tank 88 via suitable passages 770 provided in the rear 77 of the cylinder-piston unit 9.

By this means, the power unit 13 operates at minimum load.

If during the travel of the piston 103 the oil pressure exceeds the (chosen) maximum operating pressure, the valving element 21 withdraws from its seat (hence acting as an overpressure valve) so that the arriving oil is recirculated through the conduit 19.

When the lever 17 is released, the entire system is always repositioned automatically as shown in Figures 3 and 4.

The merits and advantages of the invention are apparent from the aforegoing and from an examination of the accompanying figures.

The invention is not limited to that illustrated and described but includes all technical equivalents of the invention and their combinations, if implemented within the context of the following claims.

## Claims

1. A wood-splitting machines which comprises a region (5) for resting the wood pieces (6) to be split, two means arranged to mutually withdraw from and approach said region and acting as an anvil (8) and a blade (7), and a single acting hydraulic cylinder-piston unit (9) for retracting and extending said means and operated by a hydraulic power unit (13), the circuit of which comprises at least one two-way valve feeding oil to the cylinder-piston unit and a maximum pressure valve, characterised in that the hydraulic circuit comprises a single valve provided with a valving element (21) operable by a single lever (17) by way of interposed elastic means (27), said valve feeding oil from the power unit to the cylinder-piston unit when the valving element is in the closed position, recirculating oil from the power unit to the tank when the valving element is in the open position and maintaining said valving element elastically urged towards a seal seat when the lever is in its working position.

2. A machine as claimed in claim 1, characterised by comprising a chamber (18) into which the oil delivery and return conduits open and which is positioned downstream of the feed conduit (20) for the cylinder-piston unit, and in which there is slackly inserted said valving element (21) controlled by said single lever (17) by way of a piston (23) which at one end contacts said valving element by way of said interposed elastic means, and at the other end emerges from said chamber (18) as a profiled portion (24) arranged to enable the valving element to remain spaced from its seal seat when said lever is in the rest position.

3. A machine as claimed in claim 2, characterised in that said elastic means consist of a helical spring (27) which is unloaded when said member is in its rest position, and of which contact with said valving element (21) is assured by a small counteracting spring (25) which acts against the opposite end of the valving element.

4. A machine as claimed in claim 3, characterised by comprising means allowing selection of the degree of compression of said spring (27) at which it maintains the valving element closed.

5. A machine as claimed in claim 4, characterised in that said selection means consist of a threaded striker (66) which is screwed into the body (15) defining said chamber (18), and constitutes the forward travel stop for said lever (17).

6. A machine as claimed in claim 1, characterised by comprising means for causing sudden lowering of the pressure of the oil present in the operating chamber of the cylinder-piston unit (9) when the respective piston (103) is close to its end of outward travel.

7. A machine as claimed in claim 6, characterised in that said means consist of at least one bulge (101) formed in the inner surface of the cylinder (100) of said cylinder-piston unit, and dimensioned such that when the seal means (102) of said piston (103) face said at least one bulge, the pressurized oil passes beyond the piston and runs towards the respective tank.

## Patentansprüche

1. Holzspaltmaschine mit einem Bereich (5) zum Ablegen der zu spaltenden Holzstücke (6), mit zwei Mitteln, die so angeordnet sind, daß sie sich gemeinsam von dem Bereich wegbewegen und sich ihm wieder nähern und als Amboß (8) wirken, sowie ein Blatt (7) und eine einfach wirkende hydraulische Zylinder-Kolben-Einheit (9) zum Einfahren und Ausfahren des Mittels, die durch eine Hydraulikantriebseinheit (13) angetrieben wird, deren Kreislauf mindestens ein Zweiwegeventil aufweist, das der Zylinder-Kolben-Einheit Öl zuführt, sowie ein Maximaldruckventil,
**dadurch gekennzeichnet ,** daß
der Hydraulikkreislauf ein einzelnes Ventil mit einem Ventilelement (21) aufweist, das durch einen einzelnen Hebel (17) durch ein dazwischen angeordnetes elastisches Mittel (27) bedienbar ist, wobei das Ventil der Zylinder-Kolben-Einheit von der Antriebseinheit Öl zuführt, wenn sich das Ventilelement in der geschlossenen Position befindet und Öl von der Antriebseinheit in den Tank zurückführt, wenn sich das Ventilelement in der offenen Position befindet, wobei es das Ventilelement elastisch gegen einen Dichtungssitz gedrückt hält, wenn sich der Hebel in seiner Arbeitsposition befindet.

2. Maschine nach Anspruch 1,
**dadurch gekennzeichnet,** daß
diese eine Kammer (18) aufweist, in die hinein sich die Ölzufuhr und -rückführungsleitungen öffnen, und die stromabwärts von der Zufuhrleitung (20) für die Zylinder-Kolben-Einheit angeordnet ist, wobei das Ventilelement (21), das durch den einzelnen Hebel (17) mittels eines Kolbens (23) gesteuert wird, mittels eines dazwischen positionierten elastischen Elementes locker eingesetzt und am anderen Ende von der Kammer (18) als profiliertes Teilstück (24) ausgeht und so angeordnet ist, daß das Ventilelement von seinem Dichtungssitz beabstandet bleibt, wenn sich der Hebel in der Ruheposition befindet.

3. Maschine nach Anspruch 2,
**dadurch gekennzeichnet,** daß
das elastische Mittel aus einer Schraubenfeder (27) besteht, die unbelastet ist, wenn sich das Element in seiner Ruheposition befindet, wobei deren Kontakt mit dem Ventilelement (21) durch eine kleine entgegenwirkende Feder (25) sichergestellt wird, die gegen das entgegengesetzte Ende des Ventilelementes wirkt.

4. Maschine nach Anspruch 3,
**dadurch gekennzeichnet,** daß
sie Mittel aufweist, die die Auswahl der Druckkraft der Feder (27) ermöglichen, mit der diese das Ventilelement geschlossen hält.

5. Maschine nach Anspruch 4,
**dadurch gekennzeichnet,** daß
das Auswahlmittel aus einem mit Gewinde versehenen Anschlag (66) besteht, der in den die Kammer (18) definierenden Körper (15) eingeschraubt wird und die Begrenzung für die Vorwärtsbewegung des Hebels (17) darstellt.

6. Maschine nach Anspruch 1,
**dadurch gekennzeichnet,** daß
sie Mittel aufweist, die eine plötzliche Absenkung des Druckes des in der Kammer der Zylinder-Kolben-Einheit (9) vorhandenen Öls bewirken, wenn sich der jeweilige Kolben (103) nahe am Ende seines Ausfahrweges befindet.

7. Maschine nach Anspruch 6,
**dadurch gekennzeichnet,** daß
das Mittel aus mindestens einem Wulst (101) besteht, der auf der inneren Oberfläche des Zylinders (100) der Zylinder-Kolben-Einheit ausgebildet und so bemessen ist, daß wenn das Dichtungsmittel (102) des Kolbens (103) mindestens einem Wulst gegenüberliegt, das mit Druck beaufschlagte Öl über den Kolben hinausströmt und in Richtung des jeweiligen Tanks läuft.

## Revendications

1. Machine à fendre le bois comprenant une région (5) pour reposer les morceaux de bois (6) à fendre, deux moyens étant disposés de façon à s'écarter et à s'approcher mutuellement de ladite région et agir comme une enclume (8) et une lame (7), et une unité hydraulique vérin-piston à simple action (9) pour rapprocher et écarter lesdits moyens et qui est actionnée par l'unité de puissance hydraulique (13), dont le circuit comprend au moins une soupape d'alimentation d'huile à deux voies qui fournit de l'huile à l'unité vérin-piston et à une soupape de pression maximum, caractérisée en ce que le circuit hydraulique comprend une soupape unique comprenant un élément de soupape (21) pouvant être actionné par un simple levier (17) par l'intermédiaire d'un moyen élastique interposé (27), ladite soupape amenant l'huile depuis l'unité de puissance à l'unité vérin-piston lorsque l'élément de soupape est dans la position fermée, en ramenant l'huile depuis l'unité de puissance vers le réservoir lorsque l'élément de soupape est dans la position ouverte et en maintenant ledit élément de soupape pressé élastiquement contre un siège étanche lorsque le levier est dans sa position de travail.

2. Machine selon la revendication 1, caractérisée en ce qu'elle comprend une chambre (18) dans laquelle les conduits de refoulement et de retour d'huile s'ouvrent et qui est positionnée en aval du conduit d'alimentation (20) pour l'unité vérin-piston, et dans laquelle est introduit avec du jeu ledit élément de soupape (21) contrôlé par ledit levier unique (17) par l'intermédiaire d'un piston (23) qui à une extrémité est en contact avec ledit élément de soupape par l'intermédiaire dudit moyen élastique interposé, et à une autre extrémité sort de ladite chambre (18) sous la forme d'une partie profilée (24) disposée de façon à permettre à l'élément de soupape de rester espacé de son siège lorsque ledit levier est dans la position de repos.

3. Machine selon la revendication 2, caractérisée en ce que ledit moyen élastique est constitué par un ressort hélicoïdal (27) qui est détendu lorsque ledit élément est dans sa position de repos, et dont le contact avec ledit élément de soupape (21) est assuré par un petit ressort (25) de contre action qui agit contre l'extrémité opposée de l'élément de soupape.

4. Machine selon la revendication 3, caractérisée en ce qu'elle comprend des moyens permettant de choisir le degré de compression dudit ressort (27) pour lequel il maintient fermé l'élément de soupape.

5. Machine selon la revendication 4, caractérisée en ce que lesdits moyens permettant de choisir sont constitués par une butée filetée (66) qui est vissée dans le corps (15) définissant ladite chambre (18), et qui constitue la butée de déplacement avant pour ledit levier (17).

6. Machine selon la revendication 1, caractérisée en ce qu'elle comprend des moyens pour provoquer une brusque diminution de la pression de l'huile présente dans la chambre opératoire de l'unité vérin-piston (9) lorsque le piston respectif (103) est proche de son extrémité de déplacement extérieur.

7. Machine selon la revendication 6, caractérisée en ce que lesdits moyens sont constitués par au moins un renflement (101) formé dans la surface interne du vérin (100) de ladite unité vérin-piston, et sont dimensionnés de telle façon que, lorsque les moyens d'étanchéité (102) dudit piston (103) font face audit au moins un renflement, l'huile sous pression passe au delà du piston et s'écoule en direction du réservoir respectif.
